(19) Europäisches Patentamt
European Patent Office
Office européen des brevets

(11) Numéro de publication: **0 235 486**
**B1**

(12) **FASCICULE DE BREVET EUROPEEN**

(45) Date de publication du fascicule du brevet: **23.01.91**

(51) Int. Cl.$^5$: **C 08 G 77/62**, C 04 B 35/56, C 04 B 35/00

(21) Numéro de dépôt: **86420290.8**

(22) Date de dépôt: **25.11.86**

(54) **Procédé de préparation, en deux étapes, de réticulats d'organopolysilazanes de tenue thermique améliorée pouvant servir notamment comme précurseur céramique.**

(30) Priorité: **28.11.85 FR 8517818**

(43) Date de publication de la demande:
**09.09.87 Bulletin 87/37**

(45) Mention de la délivrance du brevet:
**23.01.91 Bulletin 91/04**

(84) Etats contractants désignés:
**AT BE CH DE ES FR GB GR IT LI LU NL SE**

(56) Documents cités:
**FR-A-2 140 123**
**US-A-3 036 019**
**US-A-4 312 970**
**US-A-4 404 153**

**Le dossier contient des informations techniques présentées postérieurement au dépôt de la demande et ne figurant pas dans le présent fascicule.**

(73) Titulaire: **RHONE-POULENC CHIMIE**
**25, quai Paul Doumer**
**F-92408 Courbevoie Cédex (FR)**

(72) Inventeur: **Lebrun, Jean-Jacques**
**24, rue Pierre Brunier**
**F-69300 Caluire (FR)**
Inventeur: **Porte, Hugues**
**65, rue de Sèze**
**F-69006 Lyon (FR)**

(74) Mandataire: **Dubruc, Philippe et al**
**RHONE-POULENC CHIMIE Service Brevets Chimie 25, quai Paul-Doumer**
**F-92408 Courbevoie Cédex (FR)**

**EP 0 235 486 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

Les organopolysilazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

Les polysilazanes de départ préparés à partir d'ammoniac sont généralement appelés ammonolysats et les polysilazanes de départ préparés à partir d'un composé aminé autre que l'ammoniac comportant un groupe $NH_2$ sont appelés aminolysats qui incluent donc les ammonolysats.

Ces polysilazanes peuvent être notamment mis en forme et être pyrolysés sous forme de $Si_3N_4$, SiC ou leurs mélanges. Pour fabriquer du nitrure de silicium, il existe une autre voie qui consiste à faire réagir à haute température et en phase vapeur des chlorosilanes ($SiCl_4$, $HSiCl_3$ et $H_3SiCl_2$) sur l'ammoniac. Selon cette méthode aboutissant directement à un produit en poudre, il est difficile de fabriquer des objets en forme, en particulier, de fibres. Par contre, les polysilazanes peuvent être filées en fibres continues dont la pyrolyse aboutit à des fibres céramiques.

Ils peuvent être mis sous forme de pellicules plus ou moins minces, de pièces massives moulées, et être utilisés comme liant pour fibre céramique ou fibre de carbone et comme liant de frittage pour pièces céramiques poreuses.

Il existe toutefois des difficultés pour mettre en forme de façon aisée et économique des polysilazanes sous forme de fibres ou de revêtements qui, après pyrolyse, donnent des produits céramiques sous formes de fibres, de pellicule, de revêtements plus ou moins minces et de pièces moulées.

En effet les aminolysats de départ préparés selon les méthodes connues sont généralement sous forme de liquide de viscosité faible ou élevée, ou même à l'état pâteux, allant jusqu'à l'état solide et ils

Dans la demande de brevet japonais KOKAI 77/160 446, on décrit un procédé de polymérisation d'organopolysilazanes de haut poids moléculaire en utilisant comme catalyseur de traitement de comportent généralement une teneur qui peut être importante en espèces de faible masse moléculaire susceptibles d'être éliminées lors de la pyrolyse et par conséquent de diminuer d'autant le rendement pondéral en produit céramique ramené au produit de départ.

En plus, ces aminolysats, en particulier dans le cas où ils comportant une teneur élevée en silicium difonctionnel (par exemple $D^N$) ne sont pas suffisamment stables thermiquement lors de la pyrolyse; ils se dégradent par rupture des liaisons:

Si—NH ou Si—N

pour donner naissance à des oligomères volatils diminuant d'autant le rendement pondéral en produit céramique ramené au produit de départ.

Dans le brevet américain US—A 3 853 567 on a essayé de donner une première solution au problème ci-dessus.

Selon ce brevet on propose un procédé de fabrication de pièces en forme telles que des fibres comportant du carbure de silicium, du nitrure de silicium ou leurs mélanges avec d'autres produits céramiques, en effectuant un premier traitement thermique à une température comprise entre 200 et 800°C d'un polysilazane, en vue d'obtenir une résine carbosilazane fusible qui peut être filée à l'état fondu puis pyrolysée à une température comprise entre 800 et 2 000°C.

Le brevet ci-dessus constitue certes un progrès important mais il présente le double inconvénient de nécessiter un premier traitement thermique à une température pouvant être déjà très élevée (200—800°C) et de travailler un carbosilazane à l'état fondu sous des conditions anhydres et en atmosphère inerte. De plus, le rendement pondéral en céramique peut être insuffisant.

Dans le brevet US—A—4 535 007 on décrit un traitement de polysilazanes obtenus par aminolyse de chlorosilanes et d'hexaalkyldisilazane, par des halogénures métalliques ou des chlorosilanes sans aminolyse. Le polymère obtenu contient nécessairement des groupes $R_3SiNH$ préjudiciables à l'obtention d'un bon rendement en céramique.

Dans la demande de brevet japonais KOKAI 79/93100, on décrit un procédé de polymérisation d'organopolysilazanes de haut poids moléculaire en utilisant comme catalyseur de traitement des organopolysilazanes, des terres acides. Ce procédé présente cependant l'inconvénient de nécessiter la séparation du catalyseur solide par filtration impliqant l'emploi de solvant dans le cas de polymères atteignant des viscosités élevées.

Le brevet US—A 3 007 886 décrit un procédé de traitement de polysilazanes par des sels métalliques d'acides monocarboxyliques solubles dans les solvants hydrocarbonés et le brevet US—A 3 187 030 décrit un procédé de traitement de polysilazanes par des sels métalliques particuliers d'acide inorganiques forts, le catalyse étant donc assurée par les cations métalliques jouant le rôle d'acide de Lewis. L'enseignement de ces deux brevets vise donc une réaction de polymérisation par ouverture de liaison silazane.

Le brevet US—A 4 312 970 décrit un procédé de deux étapes consécutives d'aminolyse, le disilazane, obtenu après la lère étape d'aminolyse, réagit avec des silanes et leur fournit des atomes d'azote.

Le brevet US—A—3 036 019 décrit un procédé en deux étapes, le silazane polymérisé, obtenu par une

première étape d'aminolyse, est mis en présence d'une amine primaire ou secondaire afin de réticuler le silazane.

La présente invention a pour but de proposer un moyen simple, efficace, économique et de mise en oeuvre aisée pour préparer sous des formes les plus diverses (fils, articles moulés, revêtements, pellicules, etc . . .) des polysilazanes qui, lors de leur pyrolyse, à une température comprise entre 1 000 et 2 000°C donnent des produits céramiques présentant d'excellentes propriétés.

Il est en outre souhaitable et c'est un autre but de la présente invention de pouvoir disposer facilement d'un polysilazane qui soit assez stable à l'hydrolyse et qui conduise par pyrolyse avec un rendement pondéral élevé, à un matériau céramique. Il est nécessaire pour cela que la polysilazane présente lors de la pyrolyse une bonne tenue thermique tout en demeurant solidaire du support à revêtir et à imprégner.

Ces buts et d'autres sont atteints par la présente invention qui concerne en effet un procédé de préparation de réticulats d'organopolysilazanes et d'organopolydisilylsilazane, caractérisé en ce que:

1°) On fait réagir au moins un produit choisi parmi un silane ou un disilane de formule:

$$R_2SiCl_2,\ R_4Si_2Cl_2,$$

dans lesquels R est choisi parmi un atome d'hydrogène et un radical hydrocarboné, sur l'ammoniac ou un composé organique comportant au moins un groupe $NH_2$ et on élimine le chlorure aminé formé.

2°) On fait réagir l'aminolysat obtenu en 1°) sur au moins un composé organochlorosilicié choisi parmi un organochlorosilane, un organochlorodisilane, un organochloropolysilazane et un organochloropolydisilylsilazane présentant au moins 3 atomes de chlore par molécule en présence, de préférence, d'une amine tertiaire, puis on traite le réticulat obtenu par l'ammoniac, ou un composé organique comportant au moins un groupe $NH_2$ et on élimine le chlorure aminé formé.

Dans ce qui suit la fonctionalité f des halogénosilanes ou halogénodisilanes de départ et la fonctionnalité moyenne $(f^N)_m$ des aminolysats sont définies de la façon suivante:

Pour les halogénosilanes, la fonctionalité f est égale au nombre d'halogènes liés directement au silicium, f variant de 0 à 4:

Example: $(CH_3)_2SiCl_2$ f = 2.

Pour les halogénodisilanes, on considère le motif Si-Si comme une entité propre, c'est-à-dire que la fonctionnalité est égale au nombre d'halogènes liés directement à cette entité et peut varier de 0 à 6:

Exemple: $CH_3Cl_2SiSi\ Cl_2\ CH_3$ f = 4.

Dans les aminolysats, on transpose la notion de fonctionnalité en définissant une fonctionnalité $f^N = 1$ apportée par une liaison ≡ Si—N.

Ainsi, dans les aminolysats, du type polysilazane, ou distingue les motifs:

$M^N$ : 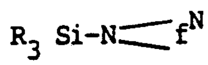 = 1

considéré comme monofonctionnel

$D^N$ : 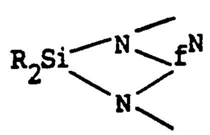 = 2

considéré comme difonctionnel

$T^N$ : 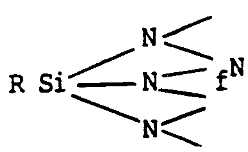 = 3

considéré comme trifonctionnel

et $Q^N$ : 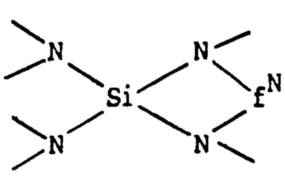 = 4

considéré comme tétrafonctionnel.

Pour les aminolysats du type poly(disilyl)silazane, la fonctionnalité $f^N$ des motifs disilyle est calculée

comme celle des halogénodisilanes en considérant les substituants azotés à la place des atomes d'halogène.

La fonctionnalité moyenne $(f^N)_m$ des aminolysats est calculée à partir des pourcentages molaires des différents motifs composant l'aminolysat pondérés de leur fonctionnalité propre; ainsi pour n motifs différents:

$$(f^N)_m = \frac{\sum_{i=1}^{i=n} (\%\ \text{molaire})_i \times f_i}{100}$$

Exemple: aminolysat ayant % molaire $D^N = 60$
% molaire $T^N = 40$

$$(f^N)_m = \frac{60 \times 2 + 40 \times 3}{100} = 2,4$$

Le procédé selon l'invention permet à coup sûr d'obtenir des réticulats de polysilazanes ayant une fonctionnalité moyenne $(f^N)_m$ supérieure strictement à 2, généralement comprise entre 2,1 et 3,0 en présentant dans leur réseau des noeuds siliciés de type $T^N$ et/ou $Q^N$ en nombre suffisant pour assurer une meilleure stabilité du produit lors de la pyrolyse évaluée par thermogravimétrie dynamique (TGA) en les pyrolysant de la température ambiante (20°C) à 1 400°C sous azote avec une vitesse de montée en température de 2°C/minute. Vis-à-vis des procédés connus, où l'on effectue l'aminolyse unique et combinée des silanes utilisés lors des étapes 1°) et 2°) du procédé de l'invention, le procédé de l'invention présente l'avantage de séparer les étapes de formation du réseau, d'avoir une répartition plus homogène des noeuds siliciés dans le réseau du réticulat conduisant à un meilleur rendement en céramique avec par exemple création de séquences:

$$T^N—D^N—(D^N)_x—D^N—T^N$$

Par ailleurs en procédant selon les deux étapes distinctes 1°) et 2°), on obtient au cours de chacune des deux étapes une quantité moindre de chlorure aminé (par exemple $NH_4Cl$) ce qui permet d'utiliser beaucoup moins de solvant anhydre (si la réaction d'aminolyse est effectuée en milieu solvant), par rapport aux quantités de solvant utilisé dans les procédés connus où l'on effectue une aminolyse unique et combinée des silanes des étapes 1°) et 2°).

La réaction des organochlorosilanes ou disilanes ou des chlorosilazanes ou chlorodisilylsilazanes sur les polysilazanes obtenus à la fin de l'étape 1°) est effectuée en masse ou en milieu solvant comme par exemple le toluène ou l'éther isopropylique de préférence en présence d'une amine tertiaire aliphatique telle que la triméthylamine, la triéthylamine, une amine aromatique telle que la pyridine, la triazine ou leurs dérivés à une température comprise entre 0 et 160°C en présence d'un composé organique aminé porteur d'au moins un groupement $NH_2$, de préférence l'ammoniac.

Comme exemples de composés comportant au moins un groupement $NH_2$ et utilisables lors des étapes 1°) et 2°) on peut citer la méthylamine, la cyclopropylamine, l'éthylamine, l'éthylènediamine, l'hexaméthylènediamine, l'aniline, la toluidine.

R peut être un atome d'hydrogène ou un radical hydrocarboné aliphatique saturé, de préférence ayant de 1 à 8 atomes de carbone, comme un radical méthyle, éthyle, propyle, butyle, pentyle, hexyle, heptyle et octyle; le radical R peut être également un radical hydrocarboné cyclique saturé ayant de 3 à 7 atomes de carbone comme le radical cyclopropyle, cyclobutyle, cyclopentyle, cyclohexyle et cycloheptyle; R peut être un radical phényle ou arylalkyle comme les radicaux benzyle et phényléthyle, ou un radical alkylaryle comme les radicaux tolyle et xylyle. R peut être également un radical aliphatiquement insaturé ayant de préférence de 2 à 8 atomes de carbone; on peut citer les radicaux éthynyle, propynyle, etc . . ., les radicaux vinyle, allyle, etc . . . et les radicaux cycloalcényle, comme les radicaux cyclopéntenyle, cyclohexényle, cycloheptényle et cyclooctényle. Les radicaux méthyle, vinyle et phényle sont les radicaux préférés. Les radicaux méthyle, vinyle et phényle sont les radicaux R préférés.

Comme organodichlorosilane ou organodichlorosilane utilisable seul ou en mélange lors de l'étape 1°) on peut citer:

$(CH_3)_2\ SiCl_2$, $(C_6H_5)_2\ SiCl_2$, $(C_6H_5)(CH_3)SiCl_2$,
$(CH_3)(CH_3CH_2)\ SiCl_2$, $(CH_3)_2\ ClSi—SiCl(CH_3)_2$,
$(CH_3)_3\ Si—SiCl_2(CH_3)$.

Les groupements organiques des composés organochlorosiliciés liés directement aux atomes de silicium utilisables lors de l'étape 2°) peuvent être des groupes R comme ci-dessus.

Lors de cette étape 2°) on préfère utiliser comme organochlorosiliciés les organochlorosilanes et les organochlorodisilanes et en particulier ceux de formule: (Vi : $CH_2 = CH$), $CH_3$ $SiCl_3$, $SiCl_4$, $ViSiCl_3$, $C_6H_5SiCl_3$, $HSiCl_3$, $CH_3Cl_2Si—SiCl(CH_3)_2$, $CH_3Cl_2Si—SiCl_2CH_3$, seuls ou en mélanges.

Les atomes de chlore des organochloropolysilazanes ou des organochloropolydisilylsilazanes utilisables également à l'étape 2°) sont portés par des atomes de silicium.

On utilise en outre, de 0,01 à 5 moles et de préférence de 0,1 à 1 mole d'organochlorosiliciés de l'étape 2°) pour une mole d'organochlorosilanes ou organochlorodisilanes de l'étape 1°).

Les réactions d'aminolyse des étapes 1°) et 2°) sont bien connues. On peut par exemple citer comme référence pour l'étape 1°) dans le cas d'un organodichlorosilane le brevet britannique GB—A—881 178 et dans le cas d'un organodichlorodisilane le brevet européen EP—A—75 826.

Selon une variante préférée de mise en oeuvre du procédé selon l'invention on effectue en outre entre les étapes 1°) et 2°) une polymérisation du polysilazane généralement cyclique obtenu à l'étape 1°) au moyen d'un catalyseur approprié utilisé en quantité catalytiquement efficace.

Cette polymérisation homogène ou hétérogène peut être effectuée notamment en suivant l'enseignement de la demande de brevet japonais KOKAI 79/93100 précitée par traitement des terres acides par exemple du type Tonsil® ou Actisil®, ou de la montmorillonite lavée à l'acide sulfurique, ou à l'aide d'un catalyseur du type Sphérosil® formé d'un support minéral poreux recouvert d'une pellicule polymérique porteur de groupement sulfonique ou phosphonique comme par exemple décrit dans le brevet français FR—A—2 505 850.

Cette polymérisation peut être également effectuée par traitement du polysilazane par des sels métalliques d'acides monocarboxyliques solubles dans les solvants hydrocarbonés conformément à l'enseignement de US—A—3 007 886 ou par des sels métalliques particuliers d'acides inorganiques forts jouant le rôle d'acide de Lewis, conformément à l'enseignent de US—A—3 187 030.

Toutefois le catalyseur de polymérisation préféré est choisi parmi $HClO_4$ et $CF_3SO_3H$.

Ce catalyseur est généralement utilisé à des concentrations comprises entre 1 ppm et 10 000 ppm d'acide ramené au polysilazane de départ et de préférence entre 10 ppm et 5 000 ppm.

La température de polymérisation est comprise entre 20°C et 180°C, de préférence entre 120°C et 160°C.

La réaction peut être conduite en masse, ce qui représente un net avantage. On peut toutefois utiliser un solvant organique tel que le toluène, le chlorure de méthylène, le benzène, le xylène, l'hexane, l'heptane, etc . . . La réaction peut être conduite à pression atmosphérique, sous pression ou sous pression réduite. La durée de la réaction est bien entendu fonction de la concentration en catalyseur et de la température de la réaction. Pour une température comprise entre 120 et 160°C et une concentration en acide comprise entre 10 et 5 000 ppm, la durée de la polymérisation est avantageusement comprise entre 30 minutes et 30 heures.

Cette polymérisation intermédiaire entre les étapes 1°) et 2°) permet d'améliorer la qualité du réseau du réticulat polysilazane qui se comporte mieux lors de la pyrolyse.

Dans l'application revêtement, pellicules, couches minces, la composition organopolysilazane obtenue selon le procédé de l'invention est de préférence utilisée sans solvant. Dans ce cas, on choisit une viscosité à 25°C comprise entre 10 et 5 000 mPa.s, de préférence entre 100 et 1 000 mPa.s.

Des viscosités supérieures peuvent être utilisées, mais il est alors nécessaire quand on veut utiliser les compositions pour enduire ou imprégner un support, de solubiliser la composition dans un solvant organique compatible avec les polysilazanes comme le benzène, le toluène, l'hexane, le cyclohexane, l'éther isopropylique, l'éther éthylique, le dichlorométhane et le chlorobenzène.

Dans l'application fibres on doit utiliser des viscosités supérieures à 5 000 mPa.s. On peut opérer sans solvant à l'état fondu ou en solution, la réticulation s'effectuant à la sortie de la filière par passage dans un four et/ou sous rayonnement (UV, faisceaux d'électron).

La composition polysilazane obtenue selon le procédé de l'invention peut contenir en outre des charges de préférence choisies parmi $SiO_2$, $Si_3N_4$, SiC, BN, $B_2O_3$, $B_4C$, AlN, $Al_2O_3$, $Al_4C_3$, TiN, $TiO_2$, TiC, $ZrO_2$, ZrC, $VO_2$ etc . . .

Elle peut également servir de matrice pour des fibres céramiques réalisées notamment en SiC, $SiO_2$, $Si_3N_4$, $B_4C$ etc . . .

Elle est particulièrement utile pour revêtir ou imprégner des supports rigides ou souples en métal ou en fibres céramiques.

Les supports recouverts ou imprégnés de la composition durcie, ou les fibres, peuvent subir immédiatement ou ultérieurement un traitement de pyrolyse de préférence sous vide ou sous pression ou sous atmosphère inerte avec une montée en température allant de la température de réticulation à 1 500—2 000°C, suivant la nature de la céramique ou du liant désirée.

La composition silazane obtenue suivant le procédé de l'invention permet donc de faire des demi-produits intermédiaires pouvant être conservés à l'air ambiant et qui peuvent être ultérieurement pyrolysés.

Ceci constitue donc un procédé particulièrement avantageux pour déposer ou imprégner sur un support une matière céramique, et pour obtenir des fibres de céramiques et des liants de frittage.

Dans les exemples suivants, illustrant l'invention sans en limiter la portée, on analyse les polysilazanes

obtenus, éventuellement traités catalytiquement entre les étapes 1°) et 2°), par thermogramométrie dynamique (TGA) en les pyrolysant de la température ambiante (20°C) à 1400°C sous azote avec une vitesse de montée en température de 2°C/minute. On indique dans les exemples le rendement TGA (% en poids de résidu solide à 1 4 00°C).

La viscosité est mesurée à 25°C et est donnée en mPa.s. De plus dans les formules Me = $CH_3$. Les réactions d'ammonolyse et de coammonolyse sont effectuées dans un premier réacteur I de 3 litres de forme cylindrique (muni d'une double enveloppe pour refroidir le volume réactionnel). Le réacteur est surmonté d'un condenseur de gaz. L'agitation mécanique est assurée par deux turbines RUSHTON® (une turbine à pales droites, une turbine à pales inclinées) disposées le long de l'arbre d'agitation. L'introduction de gaz $N_2$ et $NH_3$ se fait par l'intermédiaire d'un tube fin plongeant dans la solution de façon à faire apparaître $NH_3$ juste sous la première turbine d'agitation. En fin d'ammonolyse le mélange réactionnel est soutiré et est introduit dans un deuxième réacteur II muni d'une agitation mécanique (turbine RUSHTON® à pales droites) et d'un lit filtrant (porosité moyenne 10 μm). Les ammonolysats sont filtrés et les solvants de rinçage sont introduits dans un troisième réacteur III de 6 litres muni d'une double enveloppe et d'une agitation mécanique, d'une turbine de RUSHTON® à pales droites. Ce réacteur où l'on effectue éventuellement le traitement catalytique entre l'étape 1°) et l'étape 2°) est inerté sous $N_2$ ou mis sous vide (25 mbar).

L'ensemble de l'installation est mis sous atmosphère inerte plusieurs heures avant la manipulation. L'ensemble de la réaction, ammonolyse, filtration, évaporation du solvant se fait sous azote sec. Les produits obtenus sont placés dans des flacons étanches inertés à l'azote et conservés, pesés, manipulés sous boîte à gante inertée à l'azote.

Dans ce qui suit, sauf mentions contraires, les pourcentages indiqués sont en poids.

### Exemple Comparatif 1

On utilise comme polysilazane obtenu à la fin de l'étape 1, celui obtenu de façon connue par réaction du diméthyldichlorosilane sur l'ammoniac. L'hexaméthylcyclotrisilazane appelè $D_3^N$ est rectifié et on récupère la fraction dont le point d'ébullition est de 188°C et le point de fusion −10°C. On le sèche sur $CaCl_2$.Ce $D_3^N$ présente un rendement TGA à 1 400°C proche de 0.

### Exemple Comparatif 2

4,2 moles de $D_3^N$ (920 g) obtenu à l'exemple comparatif 1 sont polymérisés dans le réacteur III par $CF_3SO_3H$ (1 800 ppm) en masse à 120°C pendant 6 heures. Le rendement en polymère est de 57% (525 g) après microdévolatilisation (1,3 mbar à 175°C pendant 30 minutes). Le polymère obtenu est un liquide visqueux dont la viscosité à 25°C est de 360 mPa.s qui présente un rendement TGA de 8%.

### Exemple Comparatif 3

On effectue suivant le mode opératoire de l'exemple comparatif 1 l'ammonolyse directe de 149,5 g de $MeSiCl_3$ (1 mole) et de 129 g de $Me_2SiCl_2$ (1 mole), soit une composition théorique devant fournir un réticulat polysilazane de fonctionnalité $(f^N)_m = 2,5$. Après ammonolyse, filtration et évaporation du solvant comme décrit à l'exemple comparatif 1 on récupère 125 g d'un réticulat visqueux (300 mPa.s), soit un rendement pondéral de la réaction proche de 90%. L'analyse RMN$^{29}$Si de ce réticulat indique une $(f^N)_m$ réelle de 2,48. Ce rendement TGA de ce réticulat est de 33%.

### Exemple Comparatif 4

On effectue, suivant le mode opératoire de l'exemple comparatif 1, l'ammonolyse directe de 29,9 g de $MeSiCl_3$ (0,2 mole) et 232 g de $Me_2SiCl_2$ (1,8 mole), soit une composition théorique devant fournir un réticulat polysilazane de fonctionnalité $(f^N)_m = 2,1$. Après ammonolyse, filtration et évaporation du solvant comme décrit à l'exemple comparatif 1, on récupère 139 g (soit un rendement pondéral de 96%), de polysilazane réticulé de faible viscosité (= 40 mPa.s). L'analyse RMN$^{29}$Si du réticulat indique une $(f^N)_m$ réelle de 2,11. Le rendement TGA de ce réticulat n'est que de 12%.

### Exemple 5

On traite 548 g (2,5 moles) de $D_3^N$ obtenu à l'exemple comparatif 1 par 548 g (2,5 moles) de méthylchlorodisilane de formule moyenne $Me_{2,48}Si_2Cl_{3,52}$ en présence de 831 g de pyridine (10,5 moles) et 1 litre de toluène anhydre dans le réacteur I. On vise donc une $(f^N)_m$ théorique du réticulat polysilazane $(f^N)_m$ = 2,38.

Le mélange réactionnel est chauffé deux heures à 110°C sous azote. La solution est refroidie à 20°C et on fait barboter un courant de $NH_3$ (5 cm$^3$/s) pendant une heure trente. La température est maintenue à 20°C à l'aide d'un bain eau + glace. Après refroidissement à 0°C, le précipité de $NH_4Cl$ est éliminé dans le réacteur II. Le toluène est éliminé sous vide (2 mbar à 70°C). On récupère un produit visqueux légèrement jaune et trouble de viscosité 3 500 mPa.s à 25°C avec un rendement de 74%. L'analyse RMN$^{29}$Si indique une $(f^N)_m = 2,36$. Le rendement TGA est de 54%.

Bien qu'inférieur à la $(f^N)_m$ de l'exemple comparatif 3, le rendement TGA de cet essai est supérieur à celui de l'exemple 3. Ceci dénote d'une meilleure répartition des motifs trifonctionnels au sein du réseau du réticulat.

Exemple 6

On traite, suivant le mode opératoire de l'exemple 5, 548 g (2,5 moles) de $D_3^N$ par 529 g (2,5 moles) de $C_6H_5SiCl_3$, soit une fonctionnalité $(f^N)_m$ théorique égale à 2,25 en présence de 712 g de pyridine (9 moles) et 1 litre de toluène anhydre dans un réacteur de 5 litres. On récupère un réticulat blanc visqueux de viscosité 5 000 mPa.s à 25°C avec un rendement de 80%. L'analyse RMN$^{29}$Si du réticulat indique une $(f^N)_m$ = 2,24. L'analyse TGA du produit donne 48% de résidu solide à 1 400°C.

Bien qu'inférieur à la $(f^N)_m$ de l'exemple comparatif 3, le rendement TGA de cet essai est supérieur à celui de l'exemple 3. Ceci dénote d'une meilleure répartition des motifs trifonctionnels au sein du réseau du réticulat.

Les résultats des exemples 5 et 6 comparés à ceux des exemples comparatifs 1 et 2 illustrent la nécessité d'incorporer des noeuds siliciés de fonctionnalité supérieure ou égale à 3 pour réticuler efficacement le polymère et apporter une bonne stabilité thermique du réseau.

Exemple Comparatif 7

365 g de $D_3^N$ (1,67 mole) polymérisé suivant l'exemple comparatif 2 sont introduits dans le réacteur In en présence de 64,5 g de $Me_2SiCl_2$ (0,5 mole), soit une fonctionnalité $(f^N)_m$ théorique = 2,0. et 152 g de $NEt_3$ (1,5 moles) et 400 cm$^3$ de toluène sec.

Le mélange réactionnel est chauffé 2 heures à 60°C sous azote. Après avoir refroidi la solution à 20°C on fait barboter de l'ammoniac (5 cm$^3$/s pendant 1 heure) dans la solution. La température de 20°C est maintenue à l'aide d'un bain eau + glace. Après refroidissement à 0°C, le précipité de $NH_4Cl$ est filtré dans le réacteur II et le toluène est éliminé sous vide (2 mbar à 70°C), on récupère le produit qui est une huile limpide de viscosité 340 mPa.s. Le rendement de la réaction est de 92%.

Le produit obtenu ne donne un rendement TGA que de 2%.

Cet exemple comparatif montre bien que l'emploi d'un silane dichloré à l'étape 2°) ne provoque pas la réticulation du $D_3^N$ polymérisé.

Exemple 8

Dans cet exemple, on suit le mode opératoire de l'exemple comparatif 7 sauf que l'on remplace $Me_2SiCl_2$ par 108,5 g de méthylchlorodisilane de formule moyenne $Me_{2,48}Si_2Cl_{3,52}$ (mélange de $Me_2Si_2Cl_4$, $Me_3Si_2SCl_3$ et $Me_4Si_2Cl_2$), soit une fonctionnalité $(f^N)_m$ théorique = 2,10, 166,2 g de pyridine (2,1 moles) et 500 cm$^3$ de toluène. La température est portée à 110°C.

Après élimination de $NH_4Cl$ et du toluène on récupère un réticulat légèrement jaune de viscosité à 25°C de 2 500 mPa.s avec un rendement de 91% et ayant une $(f^N)_m$ = 2,10 d'après l'analyse RMN$^{29}$Si.

Le réticulat a un rendement TGA de 58%.

Bien qu'égal à la $(f^N)_m$ de l'exemple comparatif 4 le rendement TGA de cet essai est nettement supérieur à celui de l'exemple comparatif 4, ceci dénote d'une répartition plus homogène des motifs trifonctionnels au sein du réseau polysilazane formé.

Ceci indique que le réticulat a été profondément modifié et que l'incorporation de motifs Si—Si de fonctionnalité f supérieure ou égale à 3 a permis de transformer le polymère en réseau ayant une meilleure tenue à la température.

Exemple 9

Dans cet exemple, on suit le mode opératoire de l'exemple comparatif 7 sauf que le méthylchlorodisilane est remplacé par 106 g (0,5 mole) de $C_6H_5SiCl_3$, soit une fonctionnalité $(f^N)_m$ théorique = 2,1 et 143 g (1,8 moles) de pyridine dans 500 cm$^3$ de toluène. La température du mélange est portée à 110°C.

Après élimination de $NH_4Cl$ et du toluène on récupère un produit visqueux de viscosité 1 400 mPa.s légèrement trouble avec un rendement de 94%. L'analyse par RMN du $^{29}$Si et RMN du proton indique que 4,7% des motifs R liés au silicium sont des phényle (pour une théorie de 4,6%) et on peut calculer une $(f^N)_m$ = 2,10. Ceci confirme la bonne incorporation des motifs $C_6H_5$—Si— dans le réseau final de fonctionnalité moyenne d'environ 2,1.

Le rendement TGA du réticulat est de 40%. Bien qu'égal à la $(f^N)_m$ de l'exemple comparatif 4 le rendement TGA de cet essai est nettement supérieur à celui de l'exemple comparatif 4, ceci dénote d'une répartition plus homogène des motifs trifonctionnels au sein du réseau polysilazane formé.

**Revendications**

1. Procédé de préparation de réticulats d'organopolysilazanes et d'organopolydisilylsilazanes, caractérisé en ce que:

1°) On fait réagir au moins un produit choisi parmi un silane ou un disilane de formule:

$$R_2SiCl_2,\ R_4Si_2Cl_2$$

dans lesquels R est choisi parmi un atome d'hydrogène et un radical hydrocarboné sur l'ammoniac ou un composé organique comportant au moins un groupe $NH_2$ et on élimine le chlorure aminé formé.

2°) On fait réagir l'aminolysat obtenu en 1°) sur au moins un composé organochlorosilicié choisi parmi un organochlorosilane, un organochlorodisilane, un organochloropolysilazane et un organochloropolydisilylsilazane présentant en moyenne au moins 3 atomes de chlore par molécule et dont les radicaux organiques ont la même signification que le radical R de l'étape 1°), puis on traite le réticulat par l'ammoniac, ou un composé organique comportant au moins un groupe $NH_2$ et on élimine le chlorure aminé formé.

2. Procédé selon la revendication 1, caractérisé en ce que le silane ou le disilane utilisé lors de l'étape 1°) est choisi parmi:

$$(CH_3)_2SiCl_2,\ (C_6H_5)_2SiCl_2,\ (C_6H_5)(CH_3)SiCl_2,$$

$$(CH_3)(CH_3CH_2)SiCl_2,\ (CH_3)_2ClSi{-}SiCl(CH_3)_2,$$

$$(CH_3)_3Si{-}SiCl_2(CH_3).$$

3. Procédé selon la revendication 1 ou 2, caractérisé en ce que le composé organosilicié utilisé à l'étape 2°) est choisi parmi:

$$CH_3SiCl_3,\ SiCl_4,\ ViSiCl_3,\ C_6H_5SiCl_3,\ HSiCl_3,\ CH_3Cl_2Si{-}SiCl(CH_3)_2,\ CH_3Cl_2Si{-}SiCl_2CH_3.$$

4. Procédé selon l'une quelconque des revendications précédentes, caractérisé en ce que la réaction de l'étape 2°) s'effectue en présence d'une amine tertiaire.

5. Procédé selon l'une quelconque des revendications précédentes, caractérisé en ce que l'étape 1°) est effectuée en masse ou en solution à une température comprise entre 0 et 160°C.

6. Procédé selon l'une quelconque des revendications précédentes, caractérisé en ce que l'on utilise de 0,01 à 5 moles, de préférence de 0,1 à 1 mole d'organochlorosilicié de l'étape 2°) pour une mole d'organochlorosilane ou d'organochlorodisilane de l'étape 1°).

7. Procédé selon l'une quelconque des revendications précédentes, caractérisé en ce qu'on effectue en outre entre les étapes 1°) et 2°) une polymérisation de l'aminolysat obtenu à l'étape 1°) par une quantité catalytiquement efficace d'un catalyseur approprié.

8. Procédé selon la revendication 7, caractérisé en ce que l'on effectue une polymérisation homogène en masse ou dans un solvant organique en présence d'un catalyseur acide choisi parmi $HClO_4$ et $CF_3SO_3H$.

9. Procédé selon la revendication 8, caractérisé en ce que l'acide utilisé a une teneur comprise entre 1 et 10 000 ppm par rapport au poids de l'aminolysat de départ.

10. Polysilazane susceptible d'être obtenu par la mise en oeuvre d'un procédé tel que défini à l'une quelconque des revendications 1 à 9.

**Patentansprüche**

1. Verfahren zur Herstellung von Organopolysilazan- und Organopolydisilylsilazannetzwerken, dadurch gekennzeichnet, daß

1°) man wenigstens ein Mittel, ausgewählt aus einem Silan oder einem Disilan der Formeln

$$R_2SiCl_2,\ R_4Si_2Cl_2$$

worin R aus einem Wasserstoffatom und einem Kohlenwasserstoffartigen Rest ausgewählt ist, mit Ammoniak oder einer wenigstens eine $NH_2$-Gruppe aufweisenden Verbindung umsetzt und das gebildete Aminochlorid entfernt.

2°) man das in 1°) erhaltene Aminolysat mit wenigstens einer Organochlorsiliciumverbindung umsetzt, die aus durchnittlich wenigstens 3 Chloratome pro Molekül aufweisendem Organochlorsilan, Organochlordisilan, Organochlorpolysilazan und Organochlorpolydisilylsilazan, deren organische Reste die selbe Bedeutung wie R in Stufe 1°) haben, ausgewählt ist, anschließend das Netzwerk mit Ammoniak oder einer wenigstens eine $NH_2$-Gruppe aufweisenden organischen Verbindung behandelt und das gebildete Aminochlorid eliminiert.

2. Verfahren nach Anspruch 1, dadurch gekennzeichnet, daß das in Stufe 1°) verwendete Silan oder Disilan ausgewählt ist aus:

$$(CH_3)_2SiCl_2,\ (C_6H_5)_2SiCl_2,\ (C_6H_5)(CH_3)SiCl_2,$$

$$(CH_3)(CH_3CH_2)SiCl_2,\ (CH_3)_2ClSi{-}SiCl(CH_3)_2,$$

$$(CH_3)_3Si{-}SiCl_2(CH_3).$$

3. Verfahren nach Anspruch 1 oder 2, dadurch gekennzeichnet, daß die in Stufe 2°) verwendete Organosiliciumverbindung ausgewählt ist aus:

$$CH_3SiCl_3,\ SiCl_4,\ ViSiCl_3,\ C_6H_5SiCl_3,\ HSiCl_3,$$

$$CH_3Cl_2Si{-}SiCl(CH_3)_2,\ CH_3Cl_2Si{-}SiCl_2CH_3.$$

4. Verfahren nach einem der vorhergehenden Ansprüche, dadurch gekennzeichnet, daß die Umsetzung in Stufe 2°) in Gegenwart eines tertiären Amins erfolgt.

5. Verfahren nach einem der vorhergehenden Ansprüche, dadurch gekennzeichnet, daß die Stufe 1°) in Masse oder in Lösung bei einer Temperatur zwischen 0 und 160°C durchgeführt wird.

6. Verfahren nach einem der vorhergehenden Ansprüche, dadurch gekennzeichnet, daß man 0,01 bis 5 mol und vorzugsweise 0,1 bis 1 mol Organochlorsiliciumverbindung der Stufe 2°) pro 1 mol Organochlorsilan oder Organochlordisilan der Stufe 1°) einsetzt.

7. Verfahren nach einem der vorhergehenden Ansprüche, dadurch gekennzeichnet, daß man darüber hinaus zwischen den Stufen 1°) und 2°) eine Polymerisation des in Stufe 1°) erhaltenen Aminolysates durch eine katalytisch wirksame Menge eines geeigneten Katalysators durchführt.

8. Verfahren nach Anspruch 7, dadurch gekennzeichnet, daß man eine homogene Polymerisation in Masse oder in einem organischen Lösungsmittel in Gegenwart eines aus $HClO_4$ und $CF_3SO_3H$ ausgewählten, sauren Katalysators durchführt.

9. Verfahren nach Anspruch 8, dadurch gekennzeichnet, daß die verwendete Säure einen Anteil zwischen 1 und 10 000 ppm, bezogen auf das Gewicht des Ausgangsaminolysates, ausmacht.

10. Polysilazan, erhältlich durch Einsatz eines wie in einem der Ansprüche 1 bis 9 definierten Verfahrens.

## Claims

1. Process for preparing organopolysilazane or organopolydisilylsilazane network polymers, characterized in that:

1) at least one product chosen from a silane or disilane of formula:

$$R_2SiCl_2,\ R_4Si_2Cl_2$$

in which R is chosen from a hydrogen atom and a hydrocarbon radical, is reacted with ammonia or an organic compound containing at least one $NH_2$ group, and the amine chloride formed is removed;

2) the aminolysate obtained in 1) is reacted with at least one organochlorosilicon compound chosen from an organochlorosilane, an organochlorodisilane, an organochloropolysilazane and an organochloropolydisilylsilazane possessing on average at least 3 chlorine atoms per molecule and in which the organic radicals have the same meaning as the radical R of Stage 1), and the network polymer is then treated with ammonia or an organic compound containing at least one $NH_2$ group and the amine chloride formed is removed.

2. Process according to claim 1, characterized in that the silane or the disilane used in Stage 1) is chosen from:

$$(CH_3)_2SiCl_2,\ (C_6H_5)_2SiCl_2,\ (C_6H_5)(CH_3)SiCl_2,$$

$$(CH_3)(CH_3CH_2)SiCl_2,\ (CH_3)_2ClSi{-}SiCl(CH_3)_2,$$

$$(CH_3)_3Si{-}SiCl_2(CH_3).$$

3. Process according to claim 1 or 2, characterized in that the organosilicon compound used in Stage 2) is chosen from:

$$CH_3SiCl_3,\ SiCl_4,\ ViSiCl_3,\ C_6H_5SiCl_3,\ HSiCl_3,$$

$$CH_3Cl_2Si{-}SiCl(CH_3)_2,\ CH_3Cl_2Si{-}SiCl_2CH_3.$$

4. Process according to any one of the preceding claims, characterized in that the reaction in Stage 2) is performed in the presence of a tertiary amine.

5. Process according to any one of the preceding claims, characterized in that Stage 1) is performed without a solvent or in solution at a temperature between 0 and 160°C.

6. Process according to any one of the preceding claims, characterized in that from 0.01 to 5 moles, and preferably from 0.1 to 1 mole, of organochlorosilicon compound of Stage 2) are used for one mole of organochlorosilane or organochlorodisilane of Stage 1).

7. Process according to any one of the preceding claims, characterized in that, in addition, between

Stages 1) and 2), a polymerization of the aminolysate obtained in Stage 1) is performed with a catalytically effective amount of a suitable catalyst.

8. Process according to claim 7, characterized in that a homogeneous polymerization is performed without a solvent or in an organic solvent, in the presence of an acid catalyst chosen from $HClO_4$ and $CF_3SO_3H$.

9. Process according to claim 8, characterized in that the content of the acid used is between 1 and 10,000 ppm relative to the weight of the starting aminolysate.

10. Polysilazane capable of being obtained by carrying out a process as defined in any one of claims 1 to 9.